# FASCICULE DE BREVET EUROPEEN

(11) **EP 3 581 822 B1**
(45) Date de publication et mention de la délivrance du brevet: **12.08.2020**
(21) Numéro de dépôt: 19176226.9
(22) Date de dépôt: 23.05.2019
(51) Int. Cl.: F16D 55/31, F16D 55/224

(54) **SYSTEME DE FREINAGE POUR UN TRAIN D'ATTERRISSAGE D'AERONEF A ETRIER AVEC PLUSIEURS ZONES DE PINCEMENT DU DISQUE DE FREIN**
BREMSSYSTEM FÜR LUFTAHRZEUGFAHRWERK MIT BREMSSATTEL MIT MEHREREN KLEMMZONEN DER BREMSSCHEIBE
BRAKING SYSTEM FOR AN AIRCRAFT LANDING GEAR WITH CALLIPER WITH SEVERAL AREAS FOR CLAMPING THE BRAKE DISC

(30) Priorité: 12.06.2018 FR 1800600
(43) Date de publication de la demande: 18.12.2019
(73) Titulaire: Airbus Helicopters, 13725 Marignane Cedex (FR)
(72) Inventeur: PRUD'HOMME LACROIX, Pierre, 13127 VITROLLES (FR); BISTUER, Olivier, 13580 LA FARE LES OLIVIERS (FR)
(74) Mandataire: GPI & Associés

(56) Documents cités:
- EP-A1- 3 181 935
- US-A- 2 586 518
- US-A- 3 016 111

## Description

La présente invention concerne un système de freinage pour un train d'atterrissage à roue d'aéronef à étrier avec plusieurs zones de pincement du disque de frein ainsi qu'un train d'atterrissage à roue comprenant un tel système de freinage et un aéronef comprenant un tel système de freinage.

Un système de freinage connu pour aéronef comporte un disque de frein monté flottant par rapport à une jante portant un pneumatique ainsi qu'au moins un frein. Chaque frein est configuré pour freiner le disque de frein et, par suite, la jante. Un frein comporte traditionnellement un actionneur agissant sur des plaquettes de frein afin de pincer le disque de frein par l'intermédiaire desdites plaquettes de frein. Cet actionneur est généralement hydraulique.

On entend par « disque de frein monté flottant par rapport à la jante » un disque de frein comportant une mobilité par rapport à la jante permettant des déplacements de faibles amplitudes du disque de frein par rapport à la jante de sorte à éviter la transmission de contraintes mécaniques trop importantes entre le disque de frein et la jante. Toutefois, le disque de frein comporte des éléments de solidarisation coopérant avec la jante permettant à la jante et au disque d'être tout de même liés en rotation.

Par ailleurs, un système de freinage pour un train d'atterrissage à roue d'aéronef peut comporter plusieurs actionneurs, par exemple quatre ou six actionneurs, répartis de façon régulière autour de l'axe de rotation de la roue du train d'atterrissage. Un tel système de freinage agit ainsi de façon sensiblement uniforme sur le disque de frein sous les actions des actionneurs des freins lors d'un freinage.

Un système de freinage pour un train d'atterrissage à roue d'aéronef peut également comporter un seul frein, tel que décrit dans le document FR 3007096. Un tel frein comporte un seul actionneur agissant sur un étrier muni d'un mors fixe et d'un mors mobile portant respectivement une plaquette de frein. Un tel système de freinage agit alors de façon dissymétrique sur le disque de frein sous l'action de l'actionneur lors d'un freinage. De plus, l'effort nécessaire au freinage est fourni par un seul actionneur qui doit donc être dimensionné en conséquence et qui peut être difficile à implanter dans le train d'atterrissage de l'aéronef.

Le document FR 3018880 présente un actionneur électromécanique utilisable dans un tel système de freinage.

En outre, un disque de frein pour un train d'atterrissage d'aéronef est généralement muni d'une piste de freinage portant des premières dents qui forment des tenons. Les premières dents sont réparties circonférentiellement en regard d'un cercle centré sur un axe central du disque de frein, chaque première dent s'étendant radialement en regard de cet axe central. Chaque première dent s'étend circonférentiellement entre deux facettes.

La jante est en outre munie de deuxièmes dents, deux bords de deuxièmes dents adjacentes délimitant circonférentiellement une encoche formant une mortaise apte à accueillir un tenon du disque de frein.

Dès lors, chaque première dent est positionnée dans une encoche, les deux facettes d'une première dent étant en regard de deux bords de deux deuxièmes dents. Chaque première dent est alors agencée circonférentiellement entre deux bords de deux deuxièmes dents. Deux jeux fonctionnels séparent circonférentiellement chaque facette d'une première dent du disque respectivement de deux deuxièmes bords de la jante. De la sorte, les premières dents du disque de frein constituent des éléments de solidarisation en rotation du disque de frein avec la jante autour de l'axe de rotation de la jante.

En outre, chaque deuxième dent peut porter deux patins accolés à ses bords. De tels patins sont parfois dénommés « clip » et peuvent être vissés ou rivetés à la jante. De même, au moins un patin peut être fixé à chaque première dent.

De plus, un fil frein peut être fixé à la jante pour empêcher qu'une première dent sorte axialement d'une encoche.

Un tel disque de frein est parfois utilisé au sein d'un système de freinage comprenant un unique frein ou bien plusieurs freins qui ne sont pas régulièrement répartis autour de l'axe de rotation de la roue. Lors d'un freinage, les deux facettes d'une première dent du disque de frein peuvent alors subir alternativement des efforts. Il peut en résulter des efforts pulsés appliqués à la jante et à d'éventuels organes de roulement montés sur la jante. En outre, le disque de frein peut osciller dans la jante et peut générer des vibrations dans le ou les freins.

Ces phénomènes sont susceptibles de contribuer à une usure prématurée de l'interface disque de frein/jante et/ou à l'apparition de vibrations audibles et/ou à des sollicitations en fatigue.

L'art antérieur de l'invention comporte le document US 3016111 qui décrit un étrier de frein muni d'un support fixe d'une première plaquette de friction et d'un support mobile d'une seconde plaquette de friction. Ce support mobile est articulé par l'intermédiaire de deux biellettes afin de maintenir la seconde plaquette de friction sensiblement parallèle à un disque de frein.

Le document US 2586518 décrit un dispositif de freinage mécanique positionné à l'intérieur d'une roue d'un aéronef et comportant un plateau fixe et un plateau mobile le long de l'axe de la roue. Ces deux plateaux permettent de serrer un disque solidaire de la roue et de freiner de la sorte la rotation de la roue.

Le document EP 3181935 décrit un dispositif de frein comportant un étrier portant deux plaquettes basculantes situées de part et d'autre du disque de frein. Chaque plaquette a une première extrémité montée pivotante vis-à-vis de l'étrier et du disque de frein ainsi qu'une seconde extrémité entraînée en translation par un système vis-écrou afin de rapprocher ou d'écarter ces secondes extrémités des plaquettes l'une de l'autre et, de la sorte, de serrer ou de desserrer le disque de frein.

Le document US 3 016 111 A décrit un dispositif de freinage comportant un actionneur, un étrier muni de plusieurs supports, une jante mobile en rotation autour d'un axe de rotation et un disque de frein monté flottant par rapport à ladite jante.

Par ailleurs, l'arrière plan technologique de l'invention comporte le document US 7316301 présentant un étrier de frein.

La présente invention a pour but de proposer un système de freinage permettant de s'affranchir des limitations mentionnées ci-dessus en utilisant plusieurs zones de pincement entre un disque de frein et un étrier afin d'une part d'amplifier l'effort de freinage généré par un actionneur de sorte à limiter les dimensions de cet actionneur et d'autre part de répartir sensiblement uniformément sur le disque de frein les efforts de freinage de sorte à optimiser le fonctionnement et la durée de vie du système de freinage.

La présente invention a alors pour objet un système de freinage pour un train d'atterrissage à roue d'aéronef à étrier avec plusieurs zones de pincement du disque de frein ainsi qu'un train d'atterrissage comprenant un tel système de freinage et un aéronef comprenant un tel système de freinage.

Selon l'invention, un système de freinage pour un train d'atterrissage à roue d'un aéronef comporte :
- au moins un actionneur,
- au moins un étrier muni de plusieurs supports, chaque support comportant au moins une plaquette,
- une jante mobile en rotation autour d'un axe de rotation AXROT1, et
- un disque de frein monté flottant par rapport à la jante, le disque de frein comportant des éléments de solidarisation coopérant avec des encoches de la jante.

Ce système de freinage selon l'invention est notamment destiné aux trains d'atterrissage à roue des aéronefs à voilure tournante. Chaque roue d'un tel train d'atterrissage comporte une jante et un pneumatique solidaires entre eux.

Ce système de freinage est remarquable en ce que ledit au moins un étrier comporte un support interne fixe, un support intermédiaire mobile sous l'action d'un actionneur et un support externe articulé par rapport au support interne fixe, le disque de frein étant agencé d'une part entre le support intermédiaire et le support externe et d'autre part entre le support interne et le support externe, au moins une plaquette étant positionnée entre chaque support et le disque de frein, de sorte que, sous une action de l'actionneur, le support intermédiaire mobile se déplace et provoque dans un premier temps un premier déplacement du disque de frein afin que le disque de frein soit pincé par l'intermédiaire des plaquettes entre le support intermédiaire et le support externe, puis dans un second temps un second déplacement du support externe afin que le disque de frein soit pincé par l'intermédiaire des plaquettes entre le support interne et le support externe.

L'actionneur est par exemple un actionneur linéaire, tel un vérin électrique, électromécanique ou bien hydraulique générant un déplacement du support intermédiaire selon une direction de pincement DIR1. Cette direction de pincement DIR1 est sensiblement parallèle à l'axe de rotation AXROT1 de la jante.

Le support externe est articulé par rapport au support interne autour d'un axe de pivotement AXROT2 de sorte que le système de freinage comporte au moins une zone de pincement du disque de frein de part et d'autre de l'axe de pivotement AXROT2. De préférence, l'axe de pivotement AXROT2 est agencé sensiblement perpendiculairement à un plan passant par la direction de pincement DIR1 et l'axe de rotation AXROT1 de la jante.

De la sorte, un étrier comporte plusieurs zones de pincement du disque de frein, deux supports situés de part et d'autre du disque de frein comportant par exemple une plaquette par zone de pincement. Le support intermédiaire coopère ainsi avec le support externe pour former une première zone de pincement du disque de frein alors que le support interne coopère avec le support externe pour former au moins une deuxième zone de pincement, voire plusieurs zones de pincement du disque de frein.

Dans ce but, le support intermédiaire est de préférence muni d'une seule plaquette alors que le support interne est muni d'au moins une plaquette et le support externe est muni d'au moins deux plaquettes. Le disque de frein est ainsi pincé, suite à l'action de l'actionneur, d'une part entre la plaquette du support intermédiaire et une plaquette du support externe, et d'autre part entre au moins une plaquette du support interne et au moins une plaquette du support externe.

Selon un premier exemple de réalisation, un système de freinage comporte deux zones de pincement du disque de frein et un étrier muni d'un support interne comportant une seule plaquette, d'un support intermédiaire comportant une seule plaquette et d'un support externe comportant deux plaquettes.

Selon un second exemple de réalisation, un système de freinage comporte trois zones de pincement et un étrier muni d'un support interne comportant deux plaquettes, d'un support intermédiaire comportant une seule plaquette et d'un support externe comportant trois plaquettes.

De la sorte, lors d'une action de l'actionneur, le support intermédiaire se déplace parallèlement à la direction de pincement DIR1. Un premier contact entre le disque de frein et la plaquette de ce support intermédiaire se produit. Le support intermédiaire continue de se déplacer parallèlement à la direction de pincement DIR1 sous l'action de l'actionneur, provoquant un premier déplacement et/ou une première déformation du disque de frein par l'intermédiaire du support intermédiaire. Un deuxième contact entre le disque de frein et la plaquette du support externe se produit alors.

Le support intermédiaire continue de se déplacer parallèlement à la direction de pincement DIR1 sous l'action de l'actionneur, provoquant le premier déplacement et/ou la première déformation du disque de frein et un pivotement du support externe autour de l'axe de pivotement AXROT2. Un troisième contact entre le disque de frein et au moins une plaquette de ce support externe se produit. Le support intermédiaire continue de se déplacer parallèlement à la direction de pincement DIR1 sous l'action de l'actionneur, provoquant le premier déplacement et/ou la première déformation du disque de frein, le pivotement du support externe et un second déplacement et/ou une seconde déformation du disque de frein par l'intermédiaire du support externe. Un quatrième contact entre le disque de frein et au moins une plaquette du support interne se produit alors.

Le disque de frein est ainsi pincé par l'intermédiaire des plaquettes d'une part entre le support intermédiaire et le support externe, et d'autre part entre le support interne et le support externe. Le système de freinage selon l'invention permet ainsi avantageusement de multiplier les zones de pincement du disque de frein tout en limitant le nombre d'actionneurs nécessaires.

L'action d'un seul actionneur permet ainsi d'avoir plusieurs zones de pincement du disque de frein et de multiplier avantageusement l'effort généré par cet actionneur afin d'obtenir une force de freinage amplifiée. L'effort généré par cet actionneur et, par suite ses dimensions peuvent ainsi être limités par rapport à un système de freinage de l'art antérieur, facilitant notamment son implantation dans le train d'atterrissage de l'aéronef.

En conséquence, le système de freinage peut comporter un seul actionneur et un seul étrier tout en fournissant une force de freinage importante et suffisante.

Le système de freinage peut également comporter au moins deux actionneurs et au moins deux étriers, un actionneur coopérant avec un seul étrier, afin par exemple de réduire les dimensions de chaque actionneur en fonction du volume disponible pour leur implantation.

De plus, la présence de plusieurs zones de pincement pour le système de freinage selon l'invention permet avantageusement de répartir la force de freinage sur ces plusieurs zones de pincement, de préférence de façon uniforme, limitant, voire évitant de la sorte l'apparition de vibrations et/ou d'efforts pulsés dans le système de freinage ou bien de les transmettre à la jante et aux organes de roulement montés sur la jante. Le fonctionnement et la durée de vie du système de freinage selon l'invention sont ainsi améliorés.

Par ailleurs, l'axe de pivotement AXROT2 est agencé de préférence de sorte à être en intersection avec l'axe de rotation AXROT1 de la jante et est situé dans un plan médian P1 du disque de frein. On entend par « plan médian P1 » un plan parallèle et équidistant des faces externes du disque de frein venant en contact avec les plaquettes.

De la sorte, un effort sensiblement égal est appliqué sur les zones de pincement de part et d'autre de l'axe de pivotement AXROT2. Cet effort est par exemple sensiblement égal à l'effort de l'actionneur. Dans ce cas, les zones de pincement du système de freinage selon l'invention sont de préférence de dimensions identiques. Les zones de pincement du système de freinage selon l'invention sont alors réparties régulièrement et de façon sensiblement uniforme par rapport à l'axe de pivotement AXROT2.

Cependant, l'axe de pivotement AXROT2 peut être décalé par rapport à cette position afin d'obtenir des efforts différents selon la position des zones de pincement par rapport à l'axe de pivotement AXROT2, notamment lorsque les nombres de zones de pincement de part et d'autre de l'axe de pivotement AXROT2 sont différents ou bien lorsque les dimensions de ces zones de pincement de part et d'autre de l'axe de pivotement AXROT2 sont différentes. Les zones de pincement du système de freinage selon l'invention sont alors réparties de façon irrégulière par rapport à l'axe de pivotement AXROT2.

Par exemple l'axe de pivotement AXROT2 peut être décalé par rapport à l'axe de rotation AXROT1 selon une direction perpendiculaire à l'axe de rotation AXROT1 et à l'axe de pivotement AXROT2.

Selon un autre exemple, l'axe de pivotement AXROT2 peut être décalé par rapport au plan médian P1 du disque de frein selon une direction parallèle à l'axe de rotation AXROT1.

L'axe de pivotement AXROT2 peut également être décalé simultanément par rapport à l'axe de rotation AXROT1 selon une direction perpendiculaire à l'axe de rotation AXROT1 et à l'axe de pivotement AXROT2 et par rapport au plan médian P1 du disque de frein selon une direction parallèle à l'axe de rotation AXROT1.

La présente invention a aussi pour objet un train d'atterrissage à roue pour aéronef comportant au moins un système de freinage tel que précédemment décrit.

La présente invention a aussi pour objet un aéronef comportant au moins un train d'atterrissage à roue muni d'au moins un système de freinage tel que précédemment décrit.

L'invention et ses avantages apparaîtront avec plus de détails dans le cadre de la description qui suit avec des exemples donnés à titre illustratif en référence aux figures annexées qui représentent :
- la figure 1, un vue d'un train d'atterrissage d'un aéronef muni d'un système de freinage selon l'invention,
- la figure 2, une vue d'un disque de frein d'un tel système de freinage,
- la figure 3, une vue d'une jante d'un tel système de freinage,
- les figures 4 et 5, un premier exemple de réalisation du système de freinage,
- la figure 6, un deuxième exemple de réalisation du système de freinage, et
- la figure 7, un troisième exemple de réalisation du système de freinage.

Les éléments présents dans plusieurs figures distinctes sont affectés d'une seule et même référence.

L'aéronef peut notamment comporter un train d'atterrissage à roue 5. Ce train d'atterrissage à roue 5 possède une jambe de train 6 portant une fusée de roue ainsi qu'un système de freinage 10.

Ce système de freinage 10 est muni d'une jante 20 mobile en rotation autour d'un axe de rotation AXROT1, un disque de frein 40 qui coopère avec la jante 20 ainsi qu'un actionneur 11 et un étrier 12. Ainsi, lors d'une action de freinage; l'actionneur 11 agit sur l'étrier 12 afin de pincer le disque de frein 40 grâce à des plaquettes 35,36,37 que comporte l'étrier 12, de sorte à freiner la rotation du disque de frein 40 et par conséquent la rotation de la jante 20.

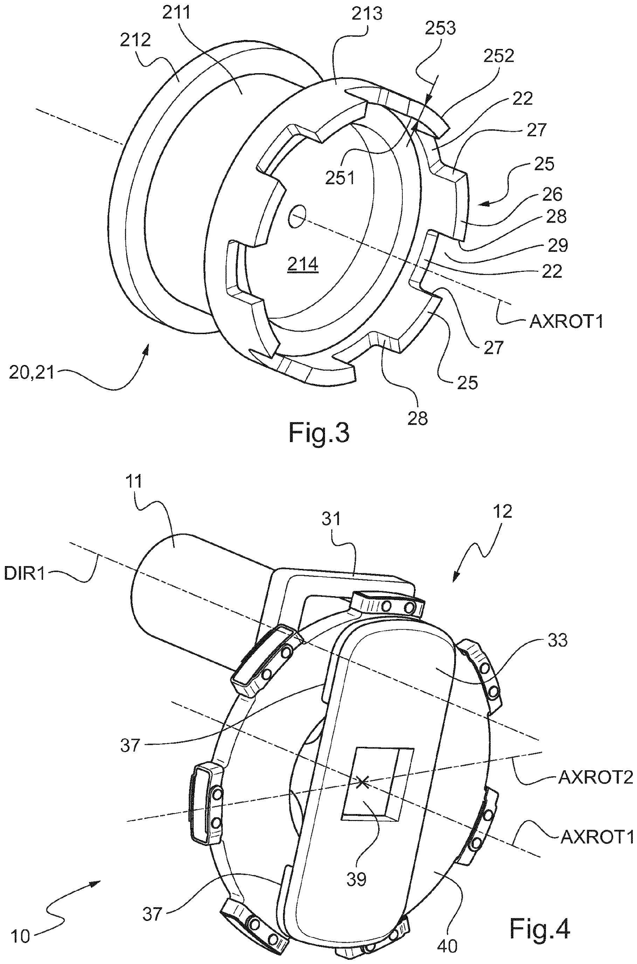

Des moyens de roulement usuels peuvent être agencés entre la jante 20 et la fusée de roue. En outre, la jante 20 porte un pneumatique non illustré par commodité. Les figures 4 à 7 représentent des exemples de réalisation de ce système de freinage 10 dont la jante 20 n'est pas représentée pour plus de clarté.

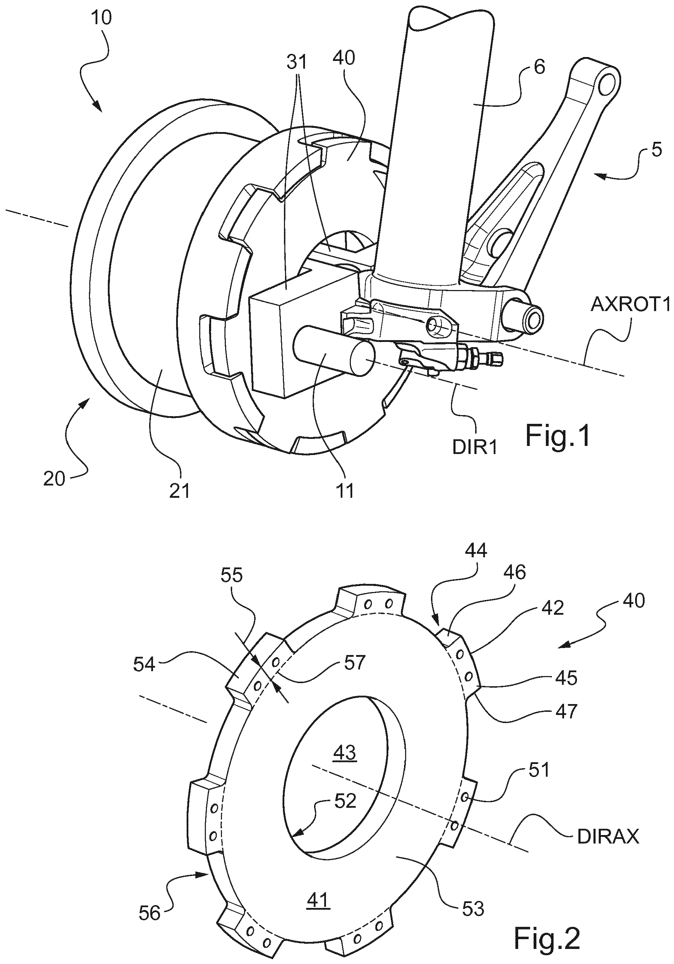

La figure 2 illustre un disque de frein 40 d'un tel système de freinage 10 destiné à un aéronef. Ce disque de frein 40 comporte une partie centrale 43 évidée et une pluralité d'éléments de solidarisation 42 formés par des premières dents s'étendant sensiblement radialement vers l'extérieur du disque de frein 40. Le disque de frein 40 a une épaisseur constante, s'étendant d'une première face de disque 53 à une deuxième face de disque 56.

Par ailleurs, la figure 3 illustre une jante 20 d'un tel système de freinage 10. Cette jante 20 est munie d'un corps de jante 21 apte à porter un pneumatique et comporte des encoches 29 ouvertes sur l'extérieur de la jante 20 et réparties circonférentiellement autour de l'axe de rotation AXROT1 de la jante 20. Chaque encoche 29 est délimitée par une paroi ayant sensiblement une forme de U.

Le disque de frein 40 est monté flottant par rapport à la jante 20, comme représenté sur la figure 1. De fait, le disque de frein 40 comporte une mobilité par rapport à la jante 20 permettant des déplacements de faibles amplitudes, les éléments de solidarisation 42 du disque de frein 40 coopérant avec les encoches 29 de la jante 20 de sorte que la jante 20 et le disque de frein 40 sont liés en rotation autour de l'axe de rotation AXROT1. En conséquence, la transmission de contraintes mécaniques entre le disque de frein 40 et la jante 20 est limitée.

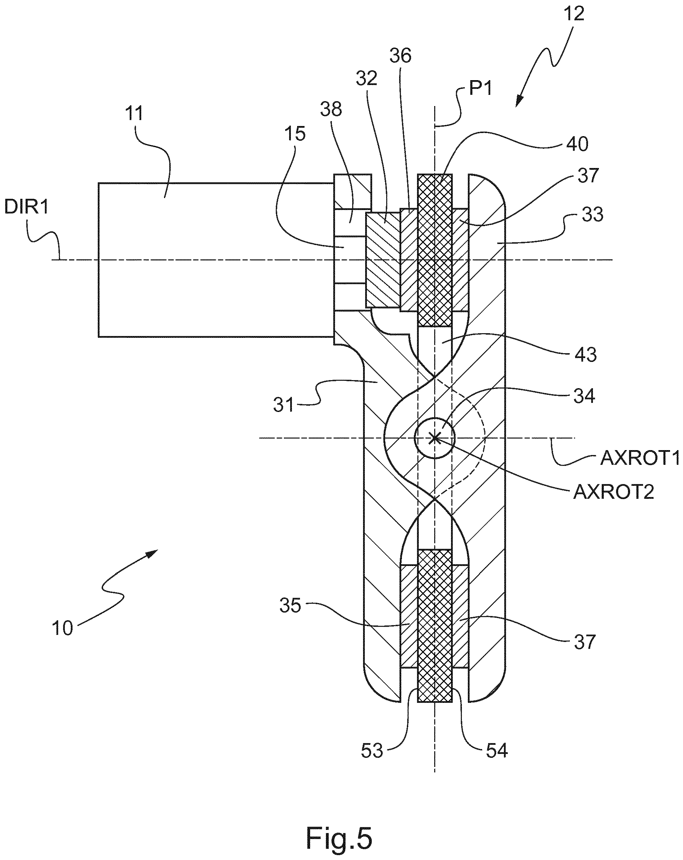

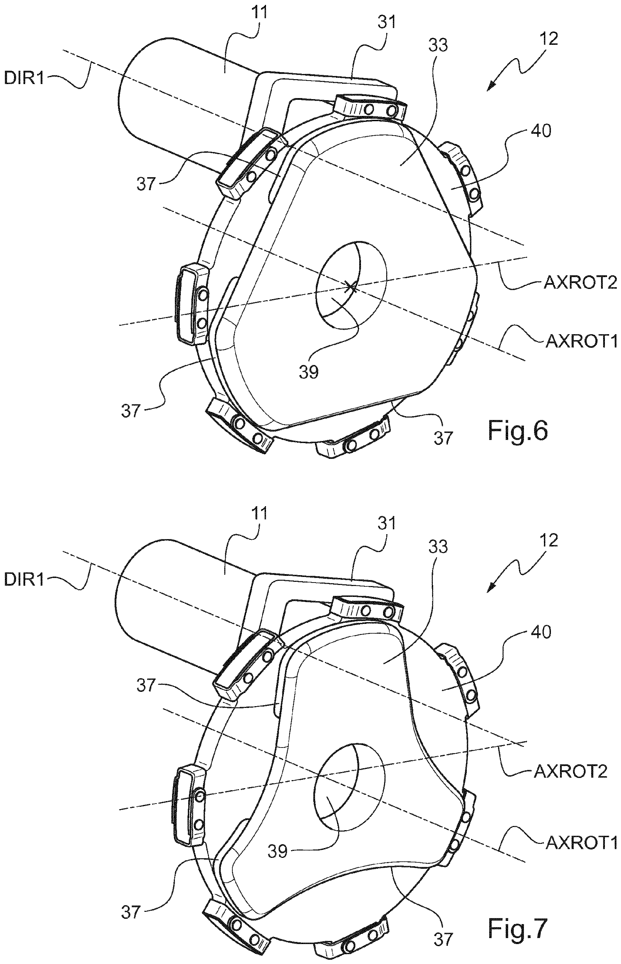

Selon les figures 4 à 7, l'étrier 12 du système de freinage 10 comporte plusieurs zones de pincement du disque de frein 40. Un premier exemple de réalisation du système de freinage 10 représenté sur les figures 4 et 5 comporte deux zones de pincement du disque de frein 40 alors qu'un deuxième et un troisième exemples de réalisation du système de freinage 10 représentés respectivement sur les figures 6 et 7 comportent trois zones de pincement du disque de frein 40.

De façon commune à ces exemples de réalisation, l'étrier 12 comporte un support interne 31 fixe, un support intermédiaire 32 mobile et un support externe 33 articulé selon un axe de pivotement AXROT2 par rapport au support interne 31 fixe. Le disque de frein 40 est agencé d'une part entre le support intermédiaire 32 et le support externe 33 et d'autre part entre le support interne 31 et le support externe 33 comme représenté sur les figures 4 à 7. Chaque support 31,32,33 comporte au moins une plaquette 35,36,37 agencée de sorte à être positionnées entre un support 31,32,33 et le disque de frein 40.

L'actionneur 11 est solidaire du support interne 31 fixe. L'actionneur 11 est un actionneur linéaire, tel un vérin électrique, électromécanique ou bien hydraulique, et comporte une tige mobile 15 susceptible de se déplacer en translation selon une direction de pincement DIR1. La direction de pincement DIR1 est parallèle à l'axe de rotation AXROT1. Le support interne 31 comporte un premier évidement 38 permettant à la tige mobile 15 de l'actionneur 11 d'agir directement sur le support intermédiaire 32 provoquant son déplacement parallèlement à la direction de pincement DIR1. Par ailleurs, la tige mobile 15 et le support intermédiaire 32 peuvent constituer une seule et même pièce.

De plus, le système de freinage 10 comporte au moins une tige de pivotement 34 agencée selon l'axe de pivotement AXROT2 entre le support interne 31 et le support externe 33 formant ainsi une liaison pivot entre le support interne 31 et le support externe 33. Le support interne 31 et le support externe 33 sont de préférence liés par une tige de pivotement 34 dans la partie centrale 43 évidée du disque de frein 40, limitant de la sorte avantageusement l'encombrement du système de freinage 10. De plus, le support interne 31 et le support externe 33 comportent un second évidement 39 au niveau de l'axe de rotation AXROT1 permettant notamment le passage de la fusée de roue supportant la jante 20.

L'axe de pivotement AXROT2 est agencé sensiblement perpendiculairement à un plan passant par la direction de pincement DIR1 et l'axe de rotation AXROT1 de la jante 20. De plus, pour le premier et le deuxième exemples de réalisation du système de freinage 10, l'axe de pivotement AXROT2 est agencé de sorte à être en intersection avec l'axe de rotation AXROT1 et dans un plan médian P1 du disque de frein 40, ce plan médian P1 étant parallèle et équidistant de la première face de disque 53 et de la deuxième face de disque 56 du disque de frein 40.

Pour le troisième exemple de réalisation du système de freinage 10, l'axe de pivotement AXROT2 est agencé de sorte à être décalé d'une part par rapport au plan médian P1 du disque de frein 40 parallèlement à l'axe de rotation AXROT1 et d'autre part par rapport à l'axe de rotation AXROT1 selon une direction perpendiculaire à l'axe de rotation AXROT1 et à l'axe de pivotement AXROT2.

Avantageusement, l'étrier 12 du système de freinage 10 comporte ainsi au moins une zone de pincement du disque de frein 40 de part et d'autre de l'axe de pivotement AXROT2. Pour chaque zone de pincement, deux supports 31,32,33 situés de part et d'autre du disque de frein 40 comportent une plaquette 35,36,37.

Selon le premier exemple de réalisation, le support intermédiaire 32 coopère avec le support externe 33 pour former une première zone de pincement du disque de frein 40 alors que le support interne 31 coopère avec le support externe 33 pour former une deuxième zone de pincement. Le support interne 31 et le support intermédiaire 32 comportent alors respectivement une seule plaquette 35,36 alors que le support externe 33 comporte deux plaquettes 37. Ces deux zones de pincement peuvent être de dimensions identiques, comme représenté sur la figure 4.

Selon les deuxième et troisième exemples de réalisation, le support intermédiaire 32 coopère avec le support externe 33 pour former une première zone de pincement du disque de frein 40 alors que le support interne 31 coopère avec le support externe 33 pour former une deuxième zone de pincement et une troisième zone de pincement. Le support interne 31 comporte alors deux plaquettes 35, le support intermédiaire 32 comporte une seule plaquette 36 et le support externe 33 comporte trois plaquettes 37. Selon le deuxième exemple de réalisation, ces trois zones de pincement sont de dimensions identiques, comme représenté sur la figure 6, permettant de fait un équilibre dans le pincement du disque de frein et une usure sensiblement uniforme. Selon le troisième exemple de réalisation, les deuxième et troisième zones de pincement sont de dimensions inférieures aux dimensions de la première zone de pincement, comme représenté sur la figure 7, permettant de la sorte de compenser le décalage de l'axe de pivotement AXROT2 par rapport au plan médian P1 du disque de frein 40 et à l'axe de rotation AXROT1 et d'obtenir un équilibre dans le pincement du disque de frein malgré ce décalage.

Selon ces deuxième et troisième exemples de réalisation, les zones de pincement du système de freinage 10 sont réparties angulairement de façon régulière autour de l'axe de rotation AXROT1. Cependant, la répartition angulaire des zones de pincement du système de freinage 10 autour de l'axe de rotation AXROT1 peut être irrégulière, que ces zones de pincement soient de dimensions identiques ou bien différentes, sans remettre en cause le fonctionnement et les avantages de ce système de freinage 10.

Lors d'une action de freinage du système de freinage 10, l'actionneur 11 génère un déplacement selon la direction de pincement DIR 1 de la tige mobile 15 qui provoque un déplacement du support intermédiaire 32 parallèlement à la direction de pincement DIR1. La plaquette 36 de ce support intermédiaire 32 est alors accolée au disque de frein 40. Le support intermédiaire 32 continue ensuite de se déplacer parallèlement à la direction de pincement DIR1 sous l'action de l'actionneur 11, provoquant un premier déplacement et/ou une première déformation du disque de frein 40 par l'intermédiaire de la plaquette 36 du support intermédiaire 32. La plaquette 37 du support externe 33 est alors accolée au disque de frein 40, le disque de frein 40 étant ainsi pincé entre les plaquettes 36,37 du support intermédiaire 32 et du support externe 33.

Le support intermédiaire 32 continue de se déplacer parallèlement à la direction de pincement DIR1 sous l'action de l'actionneur 11, provoquant le premier déplacement et/ou la première déformation du disque de frein 40 et un pivotement du support externe 33 autour de l'axe de pivotement AXROT2 par rapport au support interne 31 fixe. Au moins une plaquette 37 de ce support externe 33 est alors accolée au disque de frein 40. Le support intermédiaire 32 continue de se déplacer parallèlement à la direction de pincement DIR1 sous l'action de l'actionneur 11, provoquant le premier déplacement et/ou la première déformation du disque de frein 40, le pivotement du support externe 33 et un second déplacement et/ou une seconde déformation du disque de frein 40 par l'intermédiaire du support externe 33. Au moins une plaquette 35 du support interne 31 est alors accolée au disque de frein 40, le disque de frein 40 étant ainsi pincé entre les plaquettes 35,37 du support interne 31 et du support externe 33.

Le disque de frein est ainsi pincé sur plusieurs zones de pincement par l'intermédiaire des plaquettes 35,36,37 d'une part entre le support intermédiaire 32 et le support externe 33, et d'autre part entre le support interne 31 et le support externe 33. L'effort généré par l'actionneur 11 peut ainsi être multiplié avantageusement afin d'obtenir une force de freinage amplifiée.

De préférence, le système de freinage 10 peut comporter un seul actionneur 11 et un seul étrier 12, comme représenté sur les figures 4 à 7 tout en fournissant une force de freinage importante et suffisante.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, qui est définie dans les revendications ci jointes.

## Revendications

1. Système de freinage (10) pour un train d'atterrissage à roue (5) d'un aéronef, ledit système de freinage (10) comportant :
- au moins un actionneur (11),
- au moins un étrier (12) muni de plusieurs supports (31,32,33), chaque support (31,32,33) comportant au moins une plaquette (35,36,37),
- une jante (20) mobile en rotation autour d'un axe de rotation (AXROT1), et
- un disque de frein (40) monté flottant par rapport à ladite jante (20), ledit disque de frein (40) comportant des éléments de solidarisation (42) coopérant avec des encoches (29) de ladite jante (20),
ledit au moins un étrier (12) comportant un support interne (31) fixe, un support intermédiaire (32) mobile sous l'action d'un actionneur (11) et un support externe (33) articulé par rapport audit support interne (31), ledit disque de frein (40) étant agencé d'une part entre ledit support intermédiaire (32) et ledit support externe (33) et d'autre part entre ledit support interne (31) et ledit support externe (33), au moins une plaquette (35,36,37) étant positionnée entre chaque support (31,32,33) et ledit disque de frein (40), de sorte que, sous une action dudit actionneur (11), ledit support intermédiaire (32) mobile se déplace et provoque dans un premier temps un premier déplacement dudit disque de frein (40) afin que ledit disque de frein (40) soit pincé par l'intermédiaire desdites plaquettes (35,36,37) entre ledit support intermédiaire (32) et ledit support externe (33), puis dans un second temps un second déplacement dudit support externe (33) afin que ledit disque de frein (40) soit pincé par l'intermédiaire desdites plaquettes (35,36,37) entre ledit support interne (31) et ledit support externe (33).

2. Système de freinage (10) selon la revendication 1,
**caractérisé en ce que** ledit système de freinage (10) comporte un seul actionneur (11) et un seul étrier (12).

3. Système de freinage (10) selon la revendication 1,
**caractérisé en ce que** ledit système de freinage (10) comporte au moins deux actionneurs (2) et au moins deux étriers (3), un actionneur (11) coopérant avec un seul étrier (12).

4. Système de freinage (10) selon l'une quelconque des revendications 1 à 3,
**caractérisé en ce que** ledit au moins un étrier (12) comporte un support interne (31) muni d'au moins une plaquette (35,36,37), un support intermédiaire (32) muni d'une plaquette (35,36,37) et un support externe (33) muni d'au moins deux plaquettes (35,36,37), ledit disque de frein (40) étant pincé, suite à ladite action dudit actionneur (11), d'une part entre ladite plaquette (35,36,37) dudit support intermédiaire (32) et une plaquette (35,36,37) dudit support externe (33), et d'autre part entre au moins une plaquette (35,36,37) dudit support interne (31) et au moins une plaquette (35,36,37) dudit support externe (33).

5. Système de freinage (10) selon la revendication 4,
**caractérisé en ce que** ledit au moins un étrier (12) comporte un support interne (31) muni d'une plaquette (35,36,37), un support intermédiaire (32) muni d'une plaquette (35,36,37) et un support externe (33) muni de deux plaquettes (35,36,37).

6. Système de freinage (10) selon la revendication 4, **caractérisé en ce que** ledit au moins un étrier (12) comporte un support interne (31) muni de deux plaquettes (35,36,37), un support intermédiaire (32) muni d'une plaquette (35,36,37) et un support externe (33) muni de trois plaquettes (35,36,37).

7. Système de freinage (10) selon l'une quelconque des revendications 1 à 6,
**caractérisé en ce que** ledit support externe (33) est articulé par rapport audit support interne (31) autour d'un axe de pivotement (AXROT2) agencé perpendiculairement à un plan passant par ledit axe de rotation (AXROT1) de la jante (20) et une direction de pincement (DIR1) correspondant à une direction de déplacement dudit support intermédiaire (32) sous une action dudit actionneur (11).

8. Système de freinage (10) selon la revendication 7,
**caractérisé en ce que** ledit axe de pivotement (AXROT2) est agencé de sorte à être en intersection avec ledit axe de rotation (AXROT1) et est situé dans un plan médian (P1) dudit disque de frein (40).

9. Système de freinage (10) selon la revendication 7,
**caractérisé en ce que** ledit axe de pivotement (AXROT2) est décalé par rapport audit axe de rotation (AXROT1) selon une direction perpendiculaire audit axe de rotation (AXROT1) et audit axe de pivotement (AXROT2).

10. Système de freinage (10) selon la revendication 7,
**caractérisé en ce que** ledit axe de pivotement (AXROT2) est décalé par rapport à un plan médian (P1) dudit disque de frein (40) selon une direction parallèle audit axe de rotation (AXROT1).

11. Train d'atterrissage à roue (5) pour aéronef,
**caractérisé en ce que** ledit train d'atterrissage à roue (5) comporte au moins un système de freinage (10) selon l'une quelconque des revendications 1 à 10.

12. Aéronef comportant au moins un train d'atterrissage à roue (5),
**caractérisé en ce qu'**au moins un train d'atterrissage à roue (5) comporte au moins un système de freinage selon l'une quelconque des revendications 1 à 10.

## Patentansprüche

1. Bremssystem (10) für ein mit Rädern versehenes Landegestell (5) eines Luftfahrzeugs, wobei das Bremssystem (10) umfasst
- mindestens ein Stellglied (11),
- mindestens einen Sattel (12), der mit mehreren Trägern (31, 32, 33) versehen ist, wobei jeder Träger (31, 32, 33) mindestens einen Bremsklotz (35, 36, 37) aufweist,
- eine Felge (20), die um eine Drehachse (AXROT1) drehbar ist, und
- eine Bremsscheibe (40), die in Bezug auf die Felge (20) schwimmend montiert ist, wobei die Bremsscheibe (40) Verbindungselemente (42) aufweist, die mit Kerben (29) der Felge (20) zusammenwirken,
wobei der mindestens eine Sattel (12) einen festen Innenträger (31), einen Zwischenträger (32), der unter der Wirkung eines Stellglieds (11) beweglich ist, und einen Außenträger (33) aufweist, der in Bezug auf den Innenträger (31) gelenkig gelagert ist, wobei die Bremsscheibe (40) einerseits zwischen dem Zwischenträger (32) und dem Außenträger (33) und andererseits zwischen dem Innenträger (31) und dem Außenträger (33) angeordnet ist, wobei mindestens ein Bremsklotz (35, 36, 37) zwischen jedem Träger (31, 32, 33) und der Bremsscheibe (40) angeordnet ist, so dass bei einer Betätigung des Stellglieds (11) der bewegliche Zwischenträger (32) sich bewegt und zuerst eine erste Bewegung der Bremsscheibe (40) bewirkt, so dass die Bremsscheibe (40) über die Bremsklötze (35, 36, 37) zwischen dem Zwischenträger (32) und dem Außenträger (33) eingeklemmt wird, und anschließend eine zweite Bewegung des Außenträgers (33) bewirkt, so dass die Bremsscheibe (40) über die Bremsklötze (35, 36, 37) zwischen dem Innenträger (31) und dem Außenträger (33) eingeklemmt wird.

2. Bremssystem (10) nach Anspruch 1,
**dadurch gekennzeichnet, dass** das Bremssystem (10) ein einzelnes Stellglied (11) und einen einzelnen Sattel (12) umfasst.

3. Bremssystem (10) nach Anspruch 1,
**dadurch gekennzeichnet, dass** das Bremssystem (10) mindestens zwei Stellglieder (2) und mindestens zwei Sättel (3) umfasst, wobei ein Stellglied (11) mit einem einzigen Sattel (12) zusammenwirkt.

4. Bremssystem (10) nach einem der Ansprüche 1 bis 3,
**dadurch gekennzeichnet, dass** der mindestens eine Sattel (12) einen Innenträger (31), der mit mindestens einem Bremsklotz (35, 36, 37) versehen ist, einen Zwischenträger (32), der mit einem Bremsklotz (35, 36, 37) versehen ist, und einen Außenträger (33), der mit mindestens zwei Bremsklötzen (35, 36, 37) versehen ist, umfasst, wobei die Bremsscheibe (40) durch die Wirkung des Stellgliedes (11) einerseits zwischen dem Bremsklotz (35, 36, 37) des Zwischenträgers (32) und einem Bremsklotz (35, 36, 37) des Außenträgers (33) und andererseits zwischen mindestens einem Bremsklotz (35, 36, 37) des Innenträgers (31) und mindestens einem Bremsklotz (35, 36, 37) des Außenträgers (33) geklemmt wird.

5. Bremssystem (10) nach Anspruch 4,
**dadurch gekennzeichnet, dass** der mindestens eine Sattel (12) einen mit einem Bremsklotz (35, 36, 37) versehenen Innenträger (31), einen mit einem Bremsklotz (35, 36, 37) versehenen Zwischenträger (32) und einen mit zwei Bremsklötzen (35, 36, 37) versehenen Außenträger (33) umfasst.

6. Bremssystem (10) nach Anspruch 4,
**dadurch gekennzeichnet, dass** der mindestens eine Sattel (12) einen mit zwei Bremsklötzen (35, 36, 37) versehenen Innenträger (31), einen mit einem Bremsklotz (35, 36, 37) versehenen Zwischenträger (32) und einen mit drei Bremsklötzen (35, 36, 37) versehenen Außenträger (33) umfasst.

7. Bremssystem (10) nach einem der Ansprüche 1 bis 6,
**dadurch gekennzeichnet, dass** der Außenträger (33) in Bezug auf den Innenträger (31) um eine Schwenkachse (AXROT2) gelenkig gelagert ist, die senkrecht zu einer durch die Drehachse (AXROT1) der Felge (20) verlaufenden Ebene und einer Klemmrichtung (DIR1), die einer Verschiebungsrichtung des Zwischenträgers (32) unter der Wirkung des Stellglieds (11) entspricht, angeordnet ist.

8. Bremssystem (10) nach Anspruch 7,
**dadurch gekennzeichnet, dass** die Schwenkachse (AXROT2) so angeordnet ist, dass sie die Drehachse (AXROT1) schneidet und sich in einer Mittelebene (P1) der Bremsscheibe (40) befindet.

9. Bremssystem (10) nach Anspruch 7,
**dadurch gekennzeichnet, dass** die Schwenkachse (AXROT2) in Bezug auf die Drehachse (AXROT 1) in einer zu der Drehachse (AXROT1) und der Schwenkachse (AXROT2) senkrechten Richtung versetzt ist.

10. Bremssystem (10) nach Anspruch 7,
**dadurch gekennzeichnet, dass** die Schwenkachse (AXROT2) in Bezug auf eine Mittelebene (P1) der Bremsscheibe (40) in einer zu der Drehachse (AXROT1) parallelen Richtung versetzt ist.

11. Radlandegestell (5) für ein Luftfahrzeug,
**dadurch gekennzeichnet, dass** das Radlandegestell (5) mindestens ein Bremssystem (10) nach einem der Ansprüche 1 bis 10 aufweist.

12. Luftfahrzeug mit mindestens einem Radlandegestell (5),
**dadurch gekennzeichnet, dass** mindestens ein Radlandegestell (5) mindestens ein Bremssystem nach einem der Ansprüche 1 bis 10 aufweist.

## Claims

1. Braking system (10) for a wheeled aircraft landing gear (5), said braking system (10) comprising:
- at least one actuator (11),
- at least one calliper (12) provided with a plurality of supports (31, 32, 33), each support (31, 32, 33) comprising at least one pad (35, 36, 37),
- a rim (20) that can rotate about an axis of rotation (AXROT1), and
- a brake disk (40) mounted floatingly relative to said rim (20), said brake disk (40) comprising interlocking elements (42) which interact with notches (29) in said rim (20),
**characterised in that** said at least one calliper (12) comprises a fixed internal support (31), an intermediate support (32) movable under the action of an actuator (11) and an external support (33) hinged relative to said internal support (31), said brake disk (40) being arranged firstly between said intermediate support (32) and said external support (33) and secondly between said internal support (31) and said external support (33), at least one pad (35, 36, 37) being positioned between each support (31, 32, 33) and said brake disk (40) such that, under action of said actuator (11), said movable intermediate support (32) moves and initially causes a first movement of said brake disk (40) so that said brake disk (40) is clamped by means of said pads (35, 36, 37) between said intermediate support (32) and said external support (33), and then causes a second movement of said external support (33) so that said brake disk (40) is clamped by means of said pads (35, 36, 37) between said internal support (31) and said external support (33).

2. Braking system (10) according to claim 1, **characterised in that** said braking system (10) comprises a single actuator (11) and a single calliper (12).

3. Braking system (10) according to claim 1, **characterised in that** said braking system (10) comprises at least two actuators (2) and at least two callipers (3), one actuator (11) interacting with a single calliper (12).

4. Braking system (10) according to any of claims 1 to 3, **characterised in that** said at least one calliper (12) comprises an internal support (31) provided with at least one pad (35, 36, 37), an intermediate support (32) provided with one pad (35, 36, 37) and an external support (33) provided with at least two pads (35, 36, 37), said brake disk (40) being clamped, following said action of said actuator (11), firstly between said pad (35, 36, 37) of said intermediate support (32) and a pad (35, 36, 37) of said external support (33), and secondly between at least one pad (35, 36, 37) of said internal support (31) and at least one pad (35, 36, 37) of said external support (33).

5. Braking system (10) according to claim 4, **characterised in that** said at least one calliper (12) comprises an internal support (31) provided with one pad (35, 36, 37), an intermediate support (32) provided with one pad (35, 36, 37) and an external support (33) provided with two pads (35, 36, 37).

6. Braking system (10) according to claim 4, **characterised in that** said at least one calliper (12) comprises an internal support (31) provided with two pads (35, 36, 37), an intermediate support (32) provided with one pad (35, 36, 37) and an external support (33) provided with three pads (35, 36, 37).

7. Braking system (10) according to any of claims 1 to 6, **characterised in that** said external support (33) is hinged relative to said internal support (31) about a pivot axis (AXROT2) arranged perpendicularly to a plane passing through said axis of rotation (AXROT1) of the rim (20) and a clamping direction (DIR1) corresponding to a direction of movement of said intermediate support (32) under action of said actuator (11).

8. Braking system (10) according to claim 7, **characterised in that** said pivot axis (AXROT2) is arranged so as to intersect said axis of rotation (AXROT1) and is located in a median plane (P1) of said brake disk (40).

9. Braking system (10) according to claim 7, **characterised in that** said pivot axis (AXROT2) is offset with respect to said axis of rotation (AXROT1) in a direction perpendicular to said axis of rotation (AXROT1) and to said pivot axis (AXROT2).

10. Braking system (10) according to claim 7, **characterised in that** said pivot axis (AXROT2) is offset with respect to a median plane (P1) of said brake disk (40) in a direction parallel to said axis of rotation (AXROT1).

11. Wheeled aircraft landing gear (5), **characterised in that** said wheeled landing gear (5) comprises at least one braking system (10) according to any of claims 1 to 10.

12. Aircraft comprising at least one wheeled landing gear (5), **characterised in that** at least one wheeled landing gear (5) comprises at least one braking system according to any of claims 1 to 10.
